# EUROPÄISCHE PATENTSCHRIFT

(11) **EP 0 841 633 B1**
(45) Veröffentlichungstag und Bekanntmachung des Hinweises auf die Patenterteilung: **10.08.2005**
(21) Anmeldenummer: 97118387.6
(22) Anmeldetag: 23.10.1997
(51) Int. Cl.: G06K 1/12, G06K 19/06, G06K 19/04

(54) **Tragbarer, kartenförmiger Datenträger mit einer optischen Anzeigeeinrichtung**
Portable, card-like data carrier with an optical display
Porteur d'informations portable sous la forme d'une carte avec un dispositif d'affichage optique

(30) Priorität: 07.11.1996 DE 19645869
(43) Veröffentlichungstag der Anmeldung: 13.05.1998
(73) Patentinhaber: Deutsche Telekom AG, 53113 Bonn (DE)
(72) Erfinder: Lorenz, Manfred, Dipl.-Ing., 53129 Bonn (DE)

(56) Entgegenhaltungen:
- EP-A- 0 400 764
- US-A- 3 792 308
- US-A- 4 442 019
- US-A- 4 707 593
- US-A- 5 115 329
- PATENT ABSTRACTS OF JAPAN vol. 013, no. 357 (P-915), 10. August 1989 (1989-08-10) & JP 01 116786 A (HITACHI LTD), 9. Mai 1989 (1989-05-09)
- PATENT ABSTRACTS OF JAPAN vol. 1996, no. 09, 30. September 1996 (1996-09-30) & JP 08 118854 A (DAINIPPON PRINTING CO LTD), 14. Mai 1996 (1996-05-14)
- PATENT ABSTRACTS OF JAPAN vol. 010, no. 084 (P-442), 3. April 1986 (1986-04-03) & JP 60 220475 A (NIPPON SHINGO KK), 5. November 1985 (1985-11-05)
- PATENT ABSTRACTS OF JAPAN vol. 008, no. 101 (P-273), 12. Mai 1984 (1984-05-12) & JP 59 011479 A (NIPPON DENSHIN DENWA KOSHA), 21. Januar 1984 (1984-01-21)
- PATENT ABSTRACTS OF JAPAN vol. 1996, no. 09, 30. September 1996 (1996-09-30) & JP 08 115399 A (TOSHIBA CORP), 7. Mai 1996 (1996-05-07)
- PATENT ABSTRACTS OF JAPAN vol. 014, no. 426 (P-1105), 13. September 1990 (1990-09-13) & JP 02 165311 A (MURATA MFG CO LTD), 26. Juni 1990 (1990-06-26)

## Beschreibung

Die Erfindung betrifft einen tragbaren, kartenförmigen Datenträger mit einer ansteuerbaren, optischen Anzeigeeinrichtung nach dem Oberbegriff des Anspruchs 1.

Immer häufiger werden wiederaufladbare Magnetstreifen- und Chipkarten eingesetzt, mit denen die Karteninhaber beispielsweise an Kartentelefonen und in Kantinen an entsprechend ausgebildeten Automaten bargeldlos bezahlen können. Das noch zur Verfügung stehende Kartenguthaben konnte, da die Karten kein eigenes Display besaßen, erst nach dem Einschieben der Karte in ein Kartentelefone oder einen speziellen Automaten über eine separate Anzeigeeinrichtung dargestellt werden. Der Karteninhaber möchte jedoch zu jeder Zeit und unabhängig von separaten Displays über sein Kartenguthaben informiert sein.

Aus der EP-A-0405054 A1 ist ein tragbarer Datenträger mit einem optischen Anzeigebereich bekannt, bei der die Anzeige einer Information auf unbeschränkte Zeit erhalten bleibt. Der in dem tragbaren Datenträger eingebettete optische Anzeigebereich umfaßt eine durch eine Folie abgedeckte Schicht, die ausgehend von einer ersten Temperatur durch Erwärmung auf eine zweite Temperatur in einen ersten optischen Zustand, beispielsweise transparent, und durch Erwärmen auf eine dritte Temperatur in einen zweiten optischen Zustand, beispielsweise nicht-transparent, veränderbar ist. Da die Veränderbarkeit der temperaturabhängigen Folie reversibel ist, können durch entsprechende Erwärmung der Schicht Informationen auf diese aufgebracht oder gelöscht werden. Aus der Zusammenfassung der japanischen Patentanmeldung Nur. 01116786 A ist eine Magnetkarte mit einer ansteuerbaren optischen Anzeigeeinrichtung bekannt. Die Anzeigeeinrichtung weist eine Kammer mit einem entsprechend einer darzustellenden Information magnetisierbaren Boden auf, wobei die Kammer teilweise mit einem magnetischen Pulver gefüllt ist. Die Ansprüche sind gegen dieses Dokument abgegrenzt.

Aus der Zusammenfassung der japanischen Patentanmeldung Nr. 02165311 A ist eine Chipkarte bekannt, die von einer Solarbatterie in Verbindung mit einem Kondensator gespeist werden kann.

Der Erfindung liegt die Aufgabe zugrunde, einen tragbaren, kartenförmigen Datenträger mit einer neuartig ausgebildeten optischen Anzeigeeinrichtung verfügbar zu machen.

Dieses technische Problem löst die Erfindung mit den Merkmalen des Anspruchs 1.

Vorteilhafte Weiterbildungen sind in den abhängigen Ansprüchen umschrieben.

Um eine Information auf einem tragbaren, kartenförmigen Datenträger geschützt gegen äußere Einflüsse und für längere Zeit darstellen zu können, weist die optische Anzeigeeinrichtung eine mit elektrostatischem oder elektrostatisch aufladbarem Pulver teilweise gefüllte, allseitig geschlossene Kammer auf, in der wenigstens eine entsprechend einer darzustellenden Information elektrostatisch aufladbare Schicht angeordnet ist.

Eine zuverlässige und dauerhafte Anzeige der Information auf der Anzeigeeinrichtung wird dadurch erreicht, daß zwei elektrostatisch aufladbare Schichten im vorbestimmten Abstand parallel zueinander angeordnet sind, wobei wenigstens eine Schicht durchsichtig ist. Auf diese Weise wird nämlich die Haltekraft des Pulvers an den elektrostatisch aufladbaren Schichten erhöht.

Die Kammer ist wenigstens teilweise durch eine leitfähige Schicht umgeben, so daß keine Ladungen, beispielsweise durch Reibung an Kunststofftüchern und ähnlichem in der Umgebung des Datenträgers von außen aufgebracht werden können und dadurch die Anzeige beeinflussen. Die elektrostatisch aufladbaren Schichten sind wiederum wenigstens teilweise von einer Isolierschicht umgeben.

Die erfindungsgemäßen optischen Anzeigeeinrichtungen benötigen keine Energiequelle. Durch die geschlossene Ausführung sind sie ferner gegen mechanische Beeinflussung geschützt.

Die Erfindung wird nachstehend anhand der Ausführungsbeispiele in Verbindung mit den beiliegenden Zeichnungen näher erläutert. Es zeigen:
Fig. 1 die Draufsicht einer eine optische Anzeigeeinrichtung enthaltenden Guthabenkarte,
Fig. 2 den Längsschnitt durch den Datenträger nach Figur 1,
Fig. 3 eine vergrößerte Ansicht der optischen Anzeigeeinrichtung nach Fig. 2,
Fig. 4 das Blockschaltbild einer in einem Datenträger integrierten Speiseschaltung und
Fig. 5 das Blockschaltbild einer alternativen Speiseschaltung, die in einem Datenträger mit einer optischen Anzeige integriert ist.

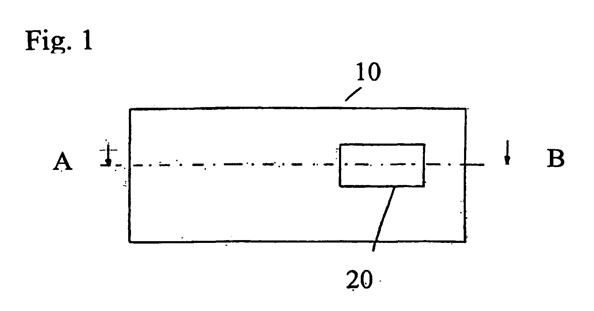

In Fig. 1 ist ein allgemein mit 10 bezeichneter tragbarer, kartenförmiger Datenträger dargestellt. Bei dem Datenträger kann es sich um eine Magnetstreifen-Guthabenkarte handeln. In die Guthabenkarte ist eine optische Anzeigeeinrichtung 20 eingebettet. Wie später noch erläutert wird, kann die optische Anzeigeeinrichtung 20 von einer geeigneten Lösch-/Schreibvorrichtung auf einen neuen aktuellen Guthabenstand eingestellt werden.

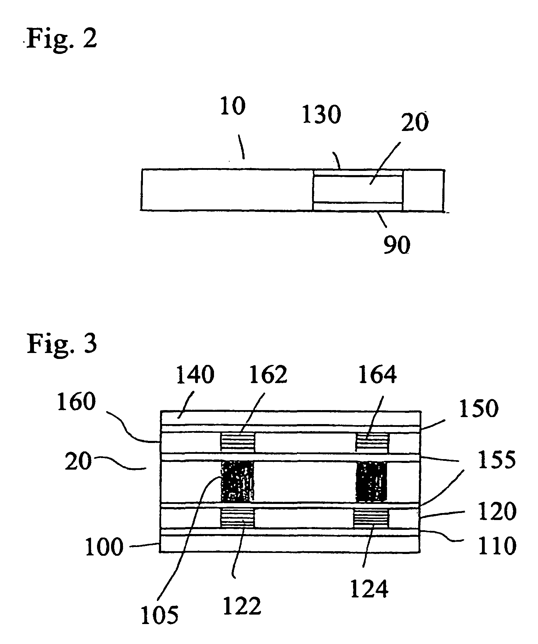

In Fig. 2 ist der Querschnitt entlang der Linie A-B der in Fig. 1 dargestellten Guthabenkarte 10 abgebildet. Fig. 2 zeigt eine optische Anzeigeeinrichtung 20, die in Fig. 3 detaillierter dargestellt ist. Die optische Anzeigeeinrichtung 20 umfasst eine allseitig geschlossene Kammer, die in eine entsprechende Aussparung in der Guthabenkarte 10 eingebracht ist. In Fig. 3 ist der schichtweise Aufbau der Kammer mit einem mehrschichtigen Boden 90 oder einer mehrschichtigen Abdeckung 130 dargestellt. Der Boden 90 der Kammer umfaßt eine leitfähige Schicht 100, die bündig mit der Unterseite der Guthabenkarte 10 abschließt. Die leitfähige Schicht 100 soll verhindern, daß Ladungen durch Reibung der Guthabenkarte 10 an Kunststofftüchern und ähnlichem von außen aufgebracht werden und dadurch die Anzeige beeinflussen können. Auf der leitfähigen Schicht 100 ist eine Isolierschicht 110 aufgebracht, die wiederum durch eine entsprechend einer darzustellenden Information elektrostatisch aufladbare Schicht 120 abgedeckt ist. Die Kammer ist durch eine Abdeckung 130 abgeschlossen, die eine hochleitfähige Schicht 140 umfaßt, die mit der Oberseite der Guthabenkarte 10 vorzugsweise bündig abschließt. Die Abdeckung 130 ist ähnlich wie der Boden 90 aufgebaut. Mit anderen Worten folgt der leitfähigen Schicht 140 eine Isolierschicht 150, auf der wiederum eine elektrostatisch aufladbare Schicht 160 aufgebracht ist. Die elektrostatisch aufladbare Schicht 160 ist durchsichtig ausgebildet. Die sich im Inneren der Kammer gegenüberliegenden elektrostatisch aufladbaren Schichten 160 und 120 bilden einen Hohlraum, der teilweise mit einem elektrostatisch aufladbaren Pulver 105 gefüllt ist. Auf den den Hohlraum begrenzenden Flächen der elektrostatisch aufladbaren Schichten 120 und 160 sind jeweils eine Isolierschicht 155 aufgebracht.

Das darzustellende Guthaben wird in Form von Ladungen 122, 124, 162 bzw. 164 auf den beiden elektrostatisch aufladbaren Schichten 120 und 160 derart aufgebracht, daß sich das Farbpulver 105 zwischen dem Boden 90 und der Abdeckung 130 auf den elektrostatisch geladenen Schichten 120 und 160 in Form der darzustellenden Information ansammelt. Die Ladungen werden beispielsweise in dem Lesegerät eines Kartentelefons durch ein Elektrodenraster auf kapazitivem Wege aufgebracht. Dazu müssen die Lösch-/Schreibvorrichtungen von Kartentelefonen, Automaten usw. entsprechend ausgebildet sein.

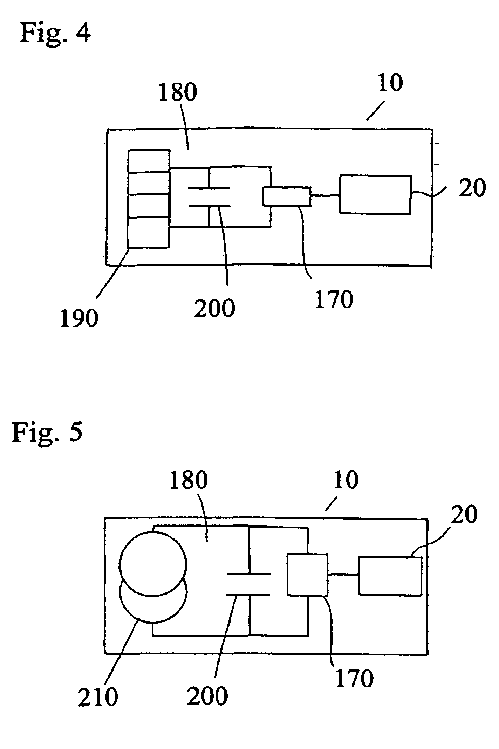

In. Fig. 4 ist schematisch eine Guthabenkarte dargestellt, die eine optische Anzeigeeinrichtung 20 und einen Speicher 170 aufweist. Der Speicher kann beispielsweise von einem Kartentelefon mit dem aktuellen Guthaben der Karte 110 geladen werden. Der Speicher 170 ist mit der optischen Anzeigeeinrichtung 20 verbunden. Darüber hinaus weist die Guthabenkarte eine integrierte Speiseschaltung 180 auf, die ein Solarzellenfeld 190 und einen damit verbundenen Kondensator 200 umfaßt. Der Kondensator 200 wird über das Solarzellenfeld 190 aufgeladen und dient der Energieversorgung des Speichers 170.

In Fig. 5 ist eine Guthabenkarte, die wiederum einen Speicher 170 und eine optische Anzeigeeinrichtung 20 aufweist, dargestellt. Die Guthabenkarte verfügt über eine Speiseschaltung 180, die einen Energiespeicher 200 in Form eines Kondensators und eine bzw. mehrere Induktionsschleifen 210 aufweist. Der Kondensator 200 wird aufgeladen, indem die Guthabenkarte beispielsweise in ein Lese-/Schreibgerät eines Kartentelefons eingesetzt wird, das ebenfalls über eine Induktionsschleife verfügt. Der Kondensator 200 wird danach über eine induktive Kopplung zwischen der Induktionsschleife 210 und der Induktionsschleife in dem Kartentelefon aufgeladen, während die Karte sich in dem Lesegerät befindet. Auf diese Weise ist ein kontaktloses Aufladen des Kondensators 200 möglich. Der Kondensator 200 sollte eine ausreichend große Kapazität aufweisen, damit der Speicher 170 über einen längeren Zeitraum hinweg mit Energie versorgt werden kann.

## Patentansprüche

1. Tragbarer, kartenförmiger Datenträger mit einer ansteuerbaren optischen Anzeigeeinrichtung (20),
**dadurch gekennzeichnet, daß**
die Anzeigeeinrichtung (20) eine mit elektrostatisch aufladbarem Farbpulver (105) teilweise gefüllte, allseitig geschlossene Kammer umfaßt, in der wenigstens eine entsprechend einer darzustellenden Information elektrostatisch aufladbare Schicht (120) angeordnet ist, wobei wenigstens eine elektrostatisch aufladbare Schicht (160) durchsichtig ist.

2. Tragbarer, kartenförmiger Datenträger nach Anspruch 1,
**dadurch gekennzeichnet, daß**
zwei elektrostatisch aufladbare Schichten (120, 160) im vorbestimmten Abstand parallel zueinander angeordnet sind, wobei wenigstens eine elektrostatisch aufladbare Schicht (160) durchsichtig ist.

3. Tragbarer, kartenförmiger Datenträger nach Anspruch 1 oder 2,
**dadurch gekennzeichnet, daß**
jede elektrostatisch aufladbare Schicht (120, 160) wenigstens teilweise von einer Isolierschicht (110, 150, 155) umgeben ist.

4. Tragbarer, kartenförmiger Datenträger nach einem der Ansprüche 1 bis 3,
**gekennzeichnet durch**
eine leitfähige Schicht (100, 140), die die Kammer wenigstens teilweise umgibt.

## Claims

1. Portable, card-shaped data carrier with a controllable, optical display device (20),
**characterized in that**
the display device (20) includes a fully enclosed chamber partially filled with electrostatically chargeable powdered pigment (105), in which chamber is arranged at least one layer (120) that can be electrostatically charged in accordance with information to be displayed, with at least one electrostatically chargeable layer (160) being transparent.

2. Portable, card-shaped data carrier according to claim 1, **characterized in that**
two electrostatically chargeable layers (120, 160) are arranged parallel to one another with a predetermined spacing, with at least one electrostatically chargeable layer (160) being transparent.

3. Portable, card-shaped data carrier according to claim 1 or 2, **characterized in that**
each electrostatically chargeable layer (120, 160) is at least partially surrounded by an insulating layer (110, 150, 155).

4. Portable, card-shaped data carrier according to one of claims 1 through 3,
**characterized by**
a conductive layer (100, 140) which at least partially surrounds the chamber.

## Revendications

1. Support de données portable, sous forme de carte, comportant un dispositif d'affichage optique activable (20),
**caractérisé en ce que**
le dispositif d'affichage (20) comprend une chambre fermée de toutes parts et partiellement remplie d'une poudre colorée (105) pouvant recevoir une charge électrostatique, chambre dans laquelle est disposée au moins une couche (120) pouvant recevoir une charge électrostatique en fonction d'une information indiquée, au moins une couche électrostatiquement chargeable (160) étant transparente.

2. Support de données portable, sous forme de carte, selon la revendication 1, **caractérisé en ce que**
deux couches (120, 160) pouvant recevoir une charge électrostatique sont disposées parallèlement l'une à l'autre et séparées par un intervalle donné, au moins une couche électrostatiquement chargeable (160) étant transparente.

3. Support de données portable, sous forme de carte, selon l'une des revendications 1 ou 2, **caractérisé en ce que** chaque couche (120, 160) pouvant recevoir une charge électrostatique est entourée au moins partiellement d'une couche isolatrice (110, 150, 155).

4. Support de données portable, sous forme de carte, selon l'une des revendications 1 à 3, **caractérisé par**
une couche conductrice (100, 140) qui entoure la chambre au moins partiellement.
